(19) **Europäisches Patentamt / European Patent Office / Office européen des brevets**

(11) **EP 3 436 772 B1**

(12) **FASCICULE DE BREVET EUROPEEN**

(45) Date de publication et mention de la délivrance du brevet:
**18.11.2020 Bulletin 2020/47**

(51) Int Cl.:
*G01B 11/22* *(2006.01)*   *G01B 21/18* *(2006.01)*
*G01N 25/72* *(2006.01)*

(21) Numéro de dépôt: **17717485.1**

(22) Date de dépôt: **30.03.2017**

(86) Numéro de dépôt international:
**PCT/FR2017/050737**

(87) Numéro de publication internationale:
**WO 2017/191379 (09.11.2017 Gazette 2017/45)**

(54) **PROCÉDÉ ET DISPOSITIF DE DÉTERMINATION DE LA PROFONDEUR D'UNE FISSURE DANS UN SOLIDE**

VERFAHREN UND VORRICHTUNG ZUR BESTIMMUNG DER RISSTIEFE BEI EINEM FESTSTOFF

METHOD AND DEVICE FOR DETERMINING THE DEPTH OF A CRACK IN A SOLID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2016 FR 1652826**

(43) Date de publication de la demande:
**06.02.2019 Bulletin 2019/06**

(73) Titulaires:
- **ESPCI**
  **75005 Paris (FR)**
- **Centre National de la Recherche Scientifique**
  **75794 Paris Cedex 16 (FR)**
- **Sorbonne Université**
  **75005 Paris (FR)**

(72) Inventeurs:
- **BOUÉ, Christine**
  **93160 NOISY LE GRAND (FR)**
- **HOLÉ, Stéphane**
  **75013 PARIS (FR)**

(74) Mandataire: **Cornuejols, Georges**
  **Cassiopi**
  **230 Avenue de l'Aube Rouge**
  **34170 Castelnau-le-Lez (FR)**

(56) Documents cités:
**US-A- 5 376 793   US-A1- 2004 262 521**

- **FEDALA Y ET AL: "Open crack depth sizing by laser stimulated infrared lock-in thermography", JOURNAL OF PHYSICS D: APPLIED PHYSICS, INSTITUTE OF PHYSICS PUBLISHING LTD, GB, vol. 47, no. 46, 29 octobre 2014 (2014-10-29), page 465501, XP020273130, ISSN: 0022-3727, DOI: 10.1088/0022-3727/47/46/465501 [extrait le 2014-10-29]**
- **CRAIG CANTELLO: "Depth determination using thermal imaging", SPIE, PO BOX 10 BELLINGHAM WA 98227-0010 USA, vol. 5606, 16 décembre 2004 (2004-12-16), pages 74-81, XP040193113, ISSN: 0277-786X, DOI: 10.1117/12.571480**

EP 3 436 772 B1

**Description**

DOMAINE TECHNIQUE DE L'INVENTION

La présente invention vise un procédé, une méthode et un dispositif de détermination de la profondeur d'une fissure dans un solide. Elle s'applique, notamment, au domaine de la détection de fissures dans des structures utilisées dans les domaines de l'aéronautique, de l'automobile et du nucléaire.

ÉTAT DE LA TECHNIQUE

Aujourd'hui, la détection de défauts de pièces métalliques et leur qualification se fait principalement par la technique de contrôle par ressuage (Pénétrant Testing, en anglais).

Le principe du ressuage est le suivant :

- Le ressuage exige une préparation de surface très soignée, appropriée au matériau à contrôler et aux polluants à éliminer de la surface. L'intérieur des éventuelles discontinuités est également nettoyé. L'expert enduit ensuite la pièce à contrôler de pénétrant, par pulvérisation électrostatique ou par immersion (parfois par pulvérisation de pénétrant en aérosol, notamment dans le cas d'un ressuage localisé sur une ou plusieurs zones désignées d'une pièce volumineuse).
- L'expert lave la pièce pour éliminer le pénétrant déposé en surface. Les conditions de lavage (pression, température, durée) sont déterminées par la gamme de ressuage, afin de laver soigneusement le produit en surface sans éliminer celui qui a pénétré dans les éventuels défauts débouchant de la pièce.
- L'expert sèche la pièce à l'étuve, parfois à l'aide d'air comprimé (air sec) à très basse pression ou de chiffons propres, secs et non pelucheux.
- L'expert applique ensuite le révélateur, en poudre, en suspension ou en solution.
- L'expert examine enfin la pièce, sous lumière naturelle dans le cas de pénétrant coloré ou sous éclairage UV (ultraviolet) dans le cas de pénétrant fluorescent, dans les délais impartis par la méthode de contrôle.
- L'expert établit finalement un rapport de contrôle dans lequel la profondeur d'une éventuelle fissure est estimée par l'expert.

Cette technique présente les inconvénients d'être polluante, d'être soumise à l'appréciation qualitative d'un expert, de ne pas être automatisable et d'être couteuse en consommables.

Il n'existe pas, aujourd'hui de méthode, non-destructive, quantitative permettant de déterminer la profondeur d'une fissure dans un solide.

On connaît, en particulier, des systèmes tels que décrits dans la demande de brevet français FR2995989 déposée le 24 septembre 2012. Dans ces systèmes, on échauffe une surface avec un laser modulé et l'on détecte, de manière synchrone, la diffusion de cet échauffement à la surface pour déterminer la profondeur de la fissure. Cependant, ces systèmes permettent uniquement une détection locale de la profondeur de la fissure, c'est-à-dire pour une partie de cette fissure. Ainsi, l'utilisation d'un tel système pour déterminer la profondeur d'une fissure dans sa globalité nécessite l'application successive du système (en différents points), ce qui présente le désavantage de demander un temps d'analyse long.

On connait également la demande de brevet US 5 376 793 qui divulgue un dispositif pour projeter un motif sur un objet a tester. Le motif permettant de détecter des fissures au moyen d'un imagerie thermique. La projection du motif est indépendante de la direction générale de chaque fissure.

On connait aussi la demande de brevet US 2004/262 521 qui divulgue un dispositif d'inspection de la surface d'un composant en le scannant dans deux directions différentes autour d'une fissure.

OBJET DE L'INVENTION

La présente invention vise à remédier à tout ou partie de ces inconvénients.

À cet effet, selon un premier aspect décrit dans la revendication 1, la présente invention vise un procédé de détermination de la profondeur d'une fissure dans un solide, qui comporte :

- une étape de détermination d'au moins une vitesse de balayage d'une face du solide, comportant la fissure, par une source thermique positionnée,
- pour chaque vitesse déterminée :

  - une étape de balayage d'une partie de la face du solide, de manière parallèle au sens général de la fissure, par la source thermique à ladite vitesse et
  - une étape de détection, synchrone à l'étape de balayage, d'au moins une valeur d'une grandeur physique représentative de l'échauffement local de la face du solide balayée,

- une étape de détermination de la profondeur de la fissure en fonction d'au moins une valeur détectée à au moins une vitesse de balayage déterminée.

Grâce à ces dispositions, le procédé permet une mesure de la profondeur non destructive, reproductible, sans contact et n'impliquant pas l'utilisation de polluants. De plus, l'itération des étapes de balayage et de détection permet au procédé de présenter une rapidité de détermination importante.

Dans des modes de réalisation, au cours de l'étape de détermination, au moins deux vitesses sont déterminées.

Dans des modes de réalisation, au cours de l'étape de détermination, au moins trois vitesses sont déterminées.

Dans des modes de réalisation, l'étape de détection comporte une étape de capture d'au moins trois images infrarouges.

Dans des modes de réalisation, le procédé objet de la présente invention comporte au moins :

- une étape de calcul d'une valeur de l'amplitude de l'échauffement réalisé à partir des images infrarouges captées et/ou
- une étape de calcul d'une valeur de la phase de l'échauffement réalisé à partir des images infrarouges captées.

La détermination de la profondeur à partir de valeurs d'amplitude confère à la profondeur déterminée une plus grande précision dans le cas de profondeurs importantes tandis que la détermination de la profondeur à partir de valeurs de phase confère à la profondeur déterminée une plus grande précision dans le cas de profondeurs faibles. On appelle une profondeur « faible », une profondeur inférieure à une profondeur critique prédéterminée correspondant à un risque d'endommagement du solide. On appelle une profondeur « importante », une profondeur supérieure à une profondeur critique prédéterminée correspondant à un risque d'endommagement du solide.

Dans des modes de réalisation, chaque étape de capture d'image est réalisée à une fréquence de $v_i/L$, où « $v_i$ » correspond à la vitesse de balayage mise en oeuvre au cours de l'étape de balayage et « L » correspond à la distance totale de balayage de la source thermique sur la face.

Dans des modes de réalisation, chaque étape de capture d'image est réalisée aux fréquences harmoniques de $nv_i/L$, où $n \geq 1$ et où « $v_i$ » correspond à la vitesse de balayage mise en oeuvre au cours de l'étape de balayage et « L » correspond à la distance totale de balayage de la source thermique sur la face.

Selon l'invention, une profondeur de la fissure déterminée au cours de l'étape de détermination est déterminée en fonction d'au moins trois valeurs d'amplitude et/ou d'au moins trois valeurs de phase captées à au moins trois fréquences, déterminées soit à partir de trois vitesses de balayage différentes, soit pour une vitesse et trois fréquences harmoniques, soit pour une combinaison de vitesses différentes et de fréquences harmoniques.

L'invention permet une détermination plus sensible de la profondeur de la fissure à partir d'un indicateur formé des trois calculs d'images d'amplitude et de phase.

Dans des modes de réalisation, la source thermique est un laser à émission continue.

Ces modes de réalisation permettent un échauffement de type linéaire.

Dans des modes de réalisation, l'ensemble d'étapes formé par les étapes de balayage, de détection et de détermination est réalisée deux fois :

- une première fois selon un premier sens le long de la fissure et
- une deuxième fois selon un deuxième sens, opposé au premier sens, le long de la fissure,

la profondeur de la fissure étant déterminée en fonction des profondeurs déterminées au cours de chaque étape de détermination.

Dans des modes de réalisation, l'ensemble d'étapes formé par les étapes de balayage, de détection et de détermination est réalisée deux fois :

- une première fois selon un premier côté de la surface par rapport à la fissure et
- une deuxième fois selon un deuxième côté de la surface, opposé au premier côté par rapport à la fissure,

la profondeur de la fissure étant déterminée en fonction des profondeurs déterminées au cours de chaque étape de détermination.

Les modes de réalisation selon les deux sens de balayage permettent de compenser la dissymétrie de la diffusion de chaleur liée au déplacement.

Les modes de réalisation de chaque côté de la fissure permettent de minimiser les éventuelles différences de distance entre la zone chauffée et la fissure.

Ces modes de réalisation permettent de renforcer la robustesse de la méthode.

La détermination de la profondeur est alors le résultat de la combinaison mathématique des résultats des différentes itérations.

Selon un deuxième aspect décrit dans la revendication 11, a présente invention vise un dispositif de détermination de la profondeur d'une fissure dans un solide, qui comporte :

- une source thermique,
- un moyen de détermination d'au moins une vitesse de balayage,
- un moyen de balayage d'une partie d'une face du solide, de manière parallèle au sens général de la fissure, par la source thermique à chaque vitesse de balayage déterminée,
- un moyen de détection, synchrone au moyen de balayage, d'au moins une valeur d'une grandeur physique représentative de l'échauffement local de la face du solide balayée, à chaque vitesse de balayage déterminée et
- un moyen de détermination de la profondeur de la fissure en fonction d'au moins une valeur détectée à au moins une vitesse de balayage déterminée.

Les buts, avantages et caractéristiques particulières du dispositif objet de la présente invention étant similaires à ceux du procédé objet de la présente invention, ils ne sont pas rappelés ici.

BRÈVE DESCRIPTION DES FIGURES

D'autres avantages, buts et caractéristiques particulières de l'invention ressortiront de la description non limitative qui suit d'au moins un mode de réalisation particulier du dispositif, du procédé et de la méthode objets de la présente invention, en regard des dessins annexés, dans lesquels :

-   la figure 1 représente, schématiquement et sous forme d'un logigramme, une succession d'étapes particulière du procédé objet de la présente invention,
-   la figure 2 représente, schématiquement, un mode de réalisation particulier du dispositif objet de la présente invention,
-   la figure 3 représente, schématiquement, une juxtaposition de courbes d'actionnement du dispositif objet de la présente invention,
-   la figure 4 représente, schématiquement, une image calculée des isophases acquises au cours de l'étape de capture,
-   la figure 5 représente, schématiquement, une image calculée des isoamplitudes acquises au cours de l'étape de capture,
-   la figure 6 représente, schématiquement, et sous forme d'un logigramme, une succession d'étapes particulière du procédé objet de la présente invention,
-   la figure 7 représente, schématiquement, un mode de réalisation particulier du dispositif objet de la présente invention,
-   la figure 8 représente, schématiquement, la détection de chaleur a différents points d'analyse dans le dispositif tel que décrit en regard de la figure 7,
-   la figure 9 représente, schématiquement, un profil d'amplitude de chaleur le long d'une ligne perpendiculaire au déplacement de la source thermique,
-   la figure 10 représente, schématiquement, un profil de phase de chaleur le long d'une ligne perpendiculaire au déplacement de la source thermique,
-   la figure 11 représente, schématiquement, une courbe de la dérivée spatiale d'ordre 2 (Laplacien) de l'amplitude calculée sur un point de la fissure au cours du procédé objet de la présente invention,
-   la figure 12 représente, schématiquement, une courbe de la dérivée spatiale d'ordre 2 (Laplacien) de la phase calculée sur un point de la fissure au cours du procédé objet de la présente invention,
-   la figure 13 représente deux courbes de profondeur évaluées en fonction de la position le long de la fissure pour deux valeurs de largeurs de fissure différentes,
-   la figure 14 représente un tracé de fissure et de chemins parcourus par des sources thermiques de chaque côté de cette fissure et dans deux sens différents pour chaque côté,

-   la figure 15 représente quatre courbes d'indice de profondeur en fonction du côté et du sens de balayement par la source thermique,
-   la figure 16 représente deux courbes de profondeur évaluées pour le tracé de fissure représenté en figure 14,
-   les figures 17 à 20 montrent des courbes de valeurs de distance entre la position de la source thermique et la fissure et
-   la figure 21 montre une courbe de profondeur évaluée en tenant compte des courbes de valeurs de distance des figures 17 à 20.

DESCRIPTION D'EXEMPLES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.
On note dès à présent que les figures ne sont pas à l'échelle.
On appelle « phase », un retard dans la propagation de la chaleur au sein d'un solide.
On appelle « terminal » tout dispositif comportant une unité de calcul. Par terminal, on entend par exemple :

-   un ordinateur,
-   une tablette numérique,
-   un ordiphone ou
-   un serveur.

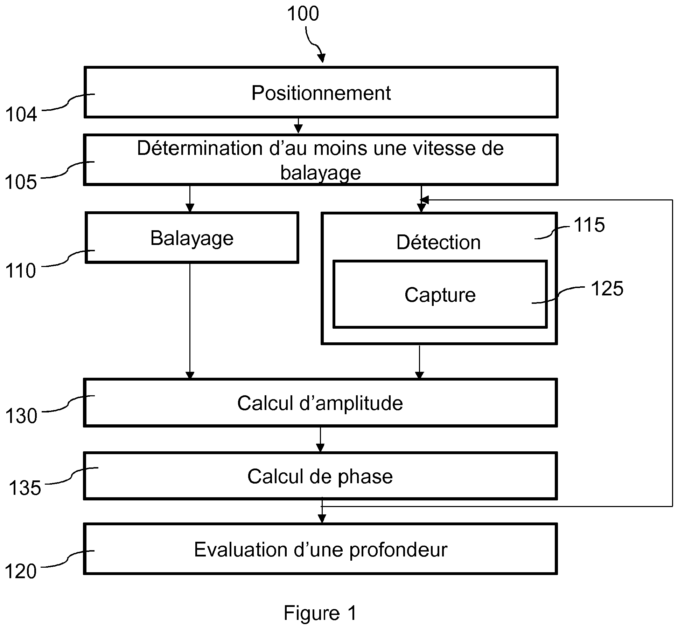

Le constat général à la base de la présente invention est le suivant :
Une fissure située dans une zone de diffusion thermique d'une source thermique positionnée à la surface d'un solide se comporte comme une barrière modifiant la diffusion de la chaleur. La diffusion de chaleur est, de plus, modifiée en fonction de la durée de chauffe de la surface du solide. Ainsi, pour une excitation thermique continue balayant un trajet parallèle au sens général de la fissure, un point au bord de la fissure est chauffé pendant une durée qui dépend de la vitesse de balayage par la source thermique.
Sur la base de ce constat, dans les modes de réalisation particuliers décrits en regard des figures 1 à 12, l'acquisition de la température pour chaque vitesse de déplacement est mesurée par détection synchrone, en synchronisme avec le déplacement de la source de chaleur.
On appelle ici la phase de la variation de température la phase de la première harmonique du signal périodisé, où une période correspond à un déplacement intégral de la source thermique le long du chemin de balayage.
Ces solutions techniques exploitent les images d'amplitude de variation de la température et de phase obtenues à différentes vitesses de déplacement de l'excitation thermique pour en extraire la signature thermique des fissures via un opérateur spatial tel, par exemple, le Laplacien ou le gradient. L'analyse de ces images en fonction d'une longueur représentative de la longueur de diffusion thermique donne une évaluation de la profondeur de la fissure.

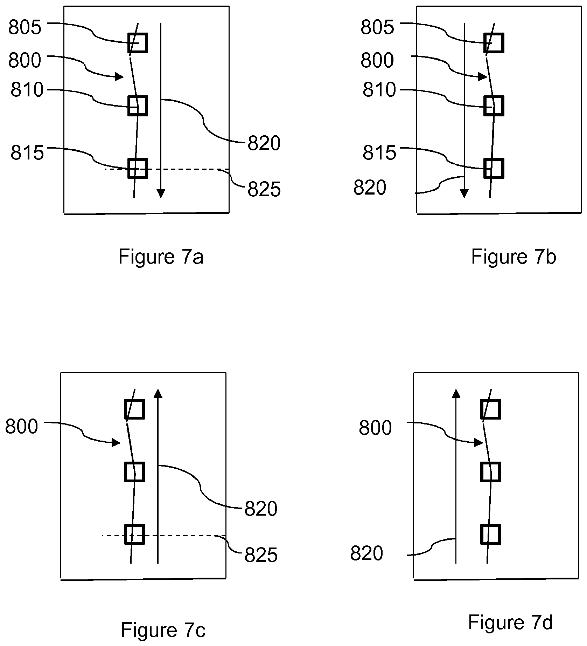

En figure 7, on observe une fissure 800 et un chemin de balayage 820 parallèle au sens général de la fissure 800. On observe, par exemple, trois points d'analyse de la signature thermique :

- un premier point 805 est situé sur la fissure à proximité d'un point de départ du balayage réalisé par la source thermique,
- un deuxième point 810 est situé sur la fissure en regard d'un point intermédiaire du balayage réalisé par la source thermique et
- un troisième point 815 est situé sur la fissure à proximité d'un point d'arrivée du balayage réalisé par la source thermique.

Ces différents points d'analyse correspondent, par exemple, chacun à un pixel d'une image captée de la fissure.

Le fonctionnement illustré en figure 7 met en oeuvre quatre balayages de la surface du solide par la source thermique formés d'un aller et d'un retour de chaque côté de la fissure.

On appelle « côté » de la fissure, une partie de la surface située à la surface positionnée d'un côté de l'axe général formé par la fissure.

On appelle « aller » ou « retour » le balayage dans un sens d'une partie de la surface et le balayage dans un sens opposé de la même partie de la surface. Ces balayages peuvent être immédiatement séquentiels ou réalisés de manière indépendante.

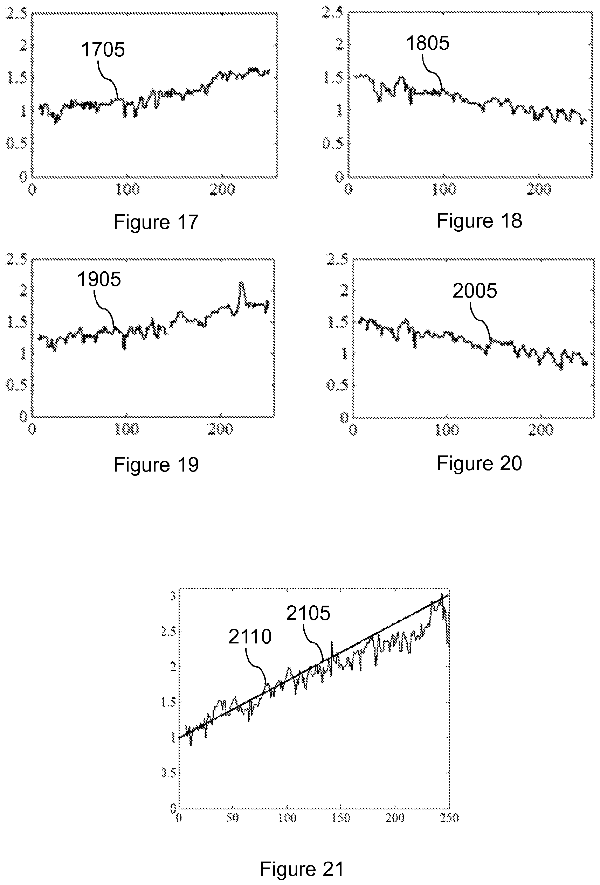

On observe, en figures 17 à 20, en ordonnée, une évaluation de la distance, en millimètre, entre la position de la source thermique et la fissure pour une fissure de profondeur, en abscisse, non constante, comprise entre 1 et 3 millimètres et d'une longueur de 20 millimètres. On observe, dans ces figures :

- en figure 17, une courbe 1705 correspondant à la distance entre la partie chauffée par la source thermique et la fissure lorsque la source thermique est déplacée d'un premier côté de la fissure dans un premier sens,
- en figure 18, une courbe 1805 correspondant à la distance entre la partie chauffée par la source thermique et la fissure lorsque la source thermique est déplacée d'un deuxième côté de la fissure dans le premier sens,
- en figure 19, une courbe 1905 correspondant à la distance entre la partie chauffée par la source thermique et la fissure lorsque la source thermique est déplacée d'un premier côté de la fissure dans un deuxième sens,
- en figure 20, une courbe 2005 correspondant à la distance entre la partie chauffée par la source thermique et la fissure lorsque la source thermique est déplacée d'un deuxième côté de la fissure dans un deuxième sens.

On observe, en figure 21, une courbe 2110 représentative de la profondeur évaluée de la fissure à partir des courbes, 1705, 1805, 1905 et 2005. Cette courbe 2110 est similaire avec la droite de profondeur 2105 attendue.

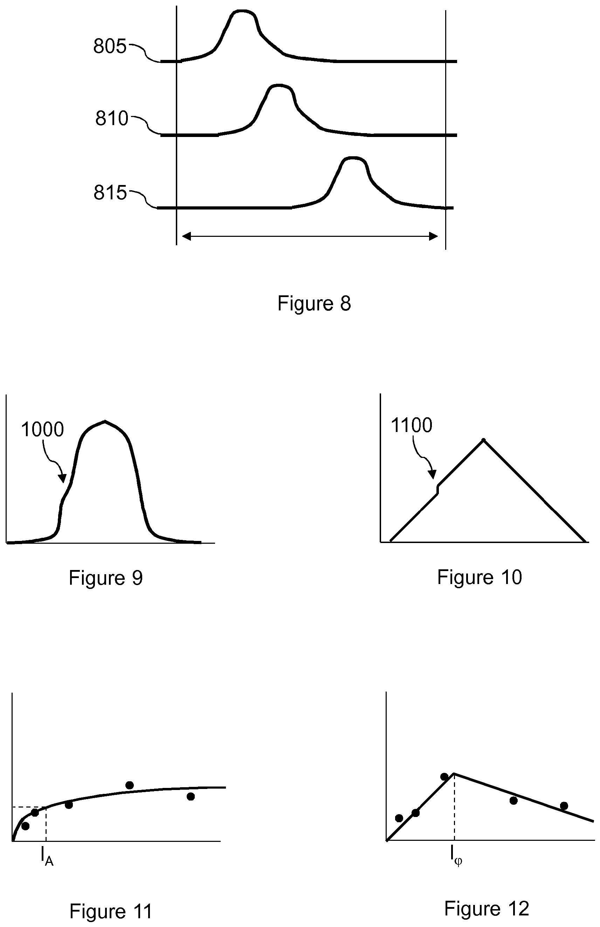

On observe, sur la figure 8, schématiquement, pour chaque point d'analyse, la valeur de l'échauffement mesuré à partir de la mise en fonctionnement de la source thermique sur une durée dite « période » qui correspond au temps nécessaire pour que la source thermique réalise un balayage.

Ainsi, en faisant varier la vitesse de balayage, on fait varier la valeur de cette pseudo-période et donc de la pseudo-fréquence correspondante.

Lorsque, pour une vitesse de balayage donnée, on réalise une détection synchrone au niveau de la fissure, on peut extraire une valeur de phase et d'amplitude de la première pseudo-harmonique du signal pour une pseudo-fréquence donnée.

Lorsqu'une fissure est présente, le profil d'amplitude et de phase présente une rupture, la signature de cette rupture signalant la présence d'une fissure et l'analyse de cette rupture à différentes fréquences permettant de déduire la profondeur de la fissure.

Un tel exemple de ruptures est notamment visible en figures 9 et 10, ces figures 9 et 10 représentant respectivement un profil d'amplitude et un profil de phase le long de la droite 825.

On aperçoit, dans en figure 9, que le maximum de l'amplitude est atteint le long du chemin parcouru par la source thermique, l'amplitude présentant schématiquement la forme d'une gaussienne de part et d'autre de ce maximum. Au niveau de la fissure, la décroissance de la température présente une rupture 1000 caractéristique de la présence d'une fissure.

On aperçoit, en figure 10, qu'au niveau de la fissure, la courbe de phase qui présente une décroissance linéaire de part et d'autre de la zone chauffée présente une rupture 1100 caractéristique de la présence d'une fissure.

On observe, sur la figure 1, un logigramme d'étapes particulier d'un mode de réalisation du procédé 100 objet de la présente invention. Ce procédé 100 de détermination de la profondeur d'une fissure dans un solide, comporte :

- une étape 105 de détermination d'au moins une vitesse de balayage d'une face du solide, comportant la fissure, par une source thermique positionnée,
- pour chaque vitesse déterminée :

- une étape 110 de balayage d'une partie de la face du solide, de manière parallèle au sens général de la fissure, par la source thermique à ladite vitesse et

- une étape 115 de détection, synchrone à l'étape de balayage, d'au moins une valeur d'une grandeur physique représentative de l'échauffement local de la face du solide balayée,

- une étape 120 de détermination de la profondeur de la fissure en fonction d'au moins une valeur détectée à au moins une vitesse de balayage déterminée.

Préférentiellement, au cours de l'étape de détermination, au moins deux vitesses sont déterminées.

Préférentiellement, au cours de l'étape de détermination, au moins trois vitesses sont déterminées.

Préalablement à l'étape 105 de détermination, le procédé 100 comporte une étape 104 de positionnement d'une source thermique à une distance de la fissure suffisamment petite pour que la chaleur diffusée arrive à la fissure pendant le temps de mesure.

Cette distance de positionnement est globalement égale à la profondeur critique de la fissure pour le solide considéré.

On appelle « profondeur critique » du solide une profondeur prédéterminée qui dépend du domaine d'application de l'invention et de la localisation de la fissure dans le solide. Cette profondeur critique correspond à une profondeur jugée, dans le domaine, comme risquant de provoquer l'endommagement du solide.

L'étape de détermination 105 d'au moins une vitesse de balayage est réalisée, par exemple, par un circuit électronique de commande d'un terminal associé à un moyen de balayage configuré pour réaliser l'étape 110 de balayage. Ce circuit électronique de commande transmet au moyen de balayage un signal représentatif de chaque valeur de vitesse de balayage à mettre en oeuvre. Préférentiellement, chaque vitesse de balayage déterminée est différente.

La gamme des vitesses, notée « $v_i$ », est déterminée par la formule : $v_i = \dfrac{DL}{\pi \mu_i^{*2}}$ où :

- « D » est la diffusivité thermique du solide,
- « L » est la longueur du chemin de balayage. Elle peut correspondre à la longueur de la fissure à la surface du solide et
- « $\mu_i^*$ » est la pseudo-longueur de diffusion thermique telle que définie ci-dessous, les valeurs de $\mu_i$ étant comprises entre 0,1d et 10d, où « d » est la distance séparant la source thermique de la fissure à caractériser.

L'objectif de l'étape de balayage 110 est de solliciter thermiquement la fissure en déplaçant la source thermique à proximité, et préférentiellement le long, de la fissure. À chaque itération, notée « i », le même chemin de balayage a lieu à une vitesse différente, déterminée au cours de l'étape de détermination 105. Ainsi, une zone circulaire de la partie de face à chauffer de rayon noté « r » est échauffée pendant une durée approximative de $2r/v_i$. Pour un chemin de balayage d'une longueur totale notée « L », le temps de chauffe total est égal à $L/v_i$.

Au cours de l'étape de balayage 110, la source thermique est appliquée à un chemin d'échauffement déterminé sur la partie de la face considérée. Préférentiellement, ce chemin est un segment de droite. Cette source thermique est, préférentiellement, un rayon émis par un laser à émission continue. Au contact du solide, le rayon échauffe le solide localement.

L'étape de balayage 110 est réalisée, par exemple, par la mise en oeuvre du moyen de balayage. Ce moyen de balayage est, par exemple, formé par un jeu de deux miroirs libres en rotation, un premier miroir déplaçant le rayon émis par le laser selon un premier axe en fonction de la rotation de ce premier miroir et un deuxième miroir déplaçant le rayon selon un deuxième axe, orthogonal au premier axe, en fonction de la rotation de ce deuxième miroir. Ces dispositions permettent un déplacement du rayon sur la partie de la face dans un repère orthogonal. La vitesse de rotation de l'un et/ou de l'autre des miroirs dépend d'une vitesse déterminée au cours de l'étape 105 de détermination. L'étape de balayage 110 est réalisée une fois pour chaque vitesse déterminée. Un tel jeu de miroirs, associé à une source de rayonnement laser, est amplement décrit dans la littérature et l'implémentation particulière d'un tel jeu de miroirs n'est donc pas rappelée ici.

Du fait du temps de chauffe local variable en fonction de la vitesse de balayage, la chaleur de la partie chauffée se diffuse plus ou moins dans le solide en fonction de la vitesse de balayage déterminée, cette chaleur agissant comme une sonde de la profondeur de la fissure.

L'étape de détection 115 est réalisée, par exemple, par une caméra infrarouge captant successivement, à une fréquence déterminée, une pluralité d'images infrarouges représentative d'une partie de la face échauffée par la source thermique.

Préférentiellement, cette étape de détection 115 comporte une étape 125 de capture d'au moins trois images infrarouges. Au cours de cette étape de capture 125, on mesure en synchronisme le flux infrarouge avec le déplacement de la source thermique. La capture est réalisée par une caméra infrarouge fixe.

Dans des variantes, la source de chaleur est un laser fixé à un support mobile.

Dans des variantes, la source de chaleur est fixe et l'échantillon mobile. Préférentiellement, le procédé 100 comporte au moins :

- une étape 130 de calcul d'une valeur de l'amplitude de l'échauffement réalisé à partir des images infrarouges captées et/ou

- une étape 135 de calcul d'une valeur de la phase de l'échauffement réalisé à partir des images infrarouges captées.

Chaque étape de calculs, 130 et 135, est réalisée par la caméra infrarouge. Chaque étape, 130 et 135, de calcul est réalisée à une pseudo-fréquence de $v_i/L$ et éventuellement à ses fréquences harmoniques selon le nombre de vitesse pris en compte.

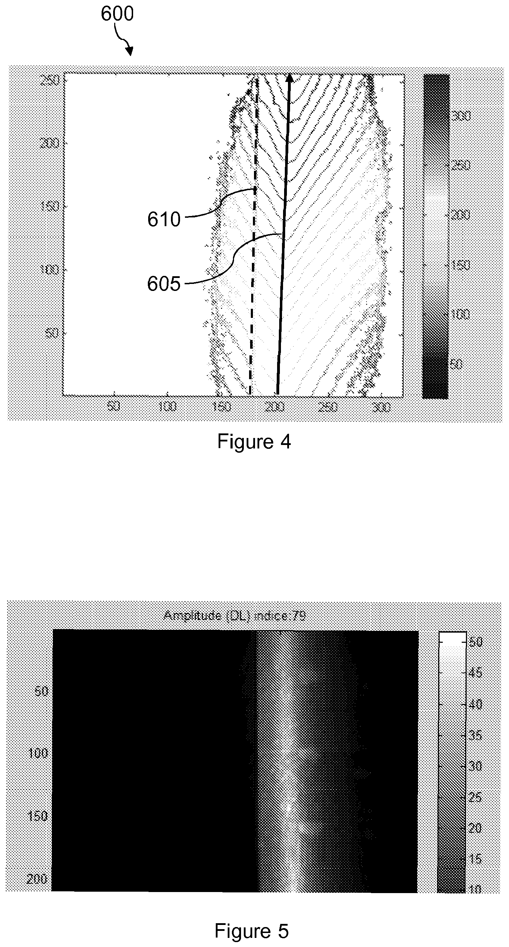

On observe, en figure 4, schématiquement, un exemple d'une image représentative des isophases obtenues lors d'un balayage de la source thermique.

On observe, notamment, le chemin 605 parcouru par la source thermique lors d'un balayage ainsi que l'empreinte 610 de la fissure causant une rupture dans les isophases pour une distance déterminée du chemin de balayage.

On appelle « pseudo longueur de diffusion thermique » une distance notée « $\mu^*$ », avec

$$\mu^* = \sqrt{\frac{DL}{\pi v_i}}$$

où D est la diffusivité thermique du solide en m2/s.

Au cours de l'étape 120 de détermination de la profondeur de la fissure, le traitement suivant est appliqué à chaque image d'amplitude captée :

- calcul de la dérivée spatiale, par exemple d'ordre 1 ou d'ordre 2 et dans un mode de réalisation préférée d'ordre 2 (Laplacien) de chaque amplitude calculée pour chaque vitesse de déplacement déterminée,
- obtention d'un ensemble de points, pouvant être ajustés par une courbe représentative de la dérivée spatiale de l'amplitude en fonction de $\mu^*$, un exemple d'une telle pseudo-courbe étant illustré en figure 11 et
- détermination d'un indicateur IA correspondant à la valeur de $\mu^*$ pour une valeur de la courbe telle par exemple, 70% du maximum de cette courbe

On observe, en figure 5, schématiquement, un exemple d'une image représentative des isoamplitudes obtenues lors d'un balayage de la source thermique.

Au cours de l'étape 120 de détermination de la profondeur de la fissure, le traitement suivant est appliqué à chaque image de phase captée :

- calcul de la dérivée spatiale, par exemple d'ordre 1 ou d'ordre 2 et dans un mode de réalisation préférée d'ordre 2 (Laplacien) de chaque phase calculée pour chaque vitesse de déplacement déterminée,
- obtention d'un ensemble de points, pouvant être ajustés par une courbe représentative de la dérivée spatiale de la phase en fonction de $\mu^*$, un exemple d'une telle courbe étant illustré en figure 12 et
- détermination d'un indicateur IA correspondant à la

valeur de $\mu^*$ pour par exemple la valeur maximale de la courbe.

Ce traitement peut être réalisé au résultat de la multiplication de l'image d'amplitude par l'image de phase.

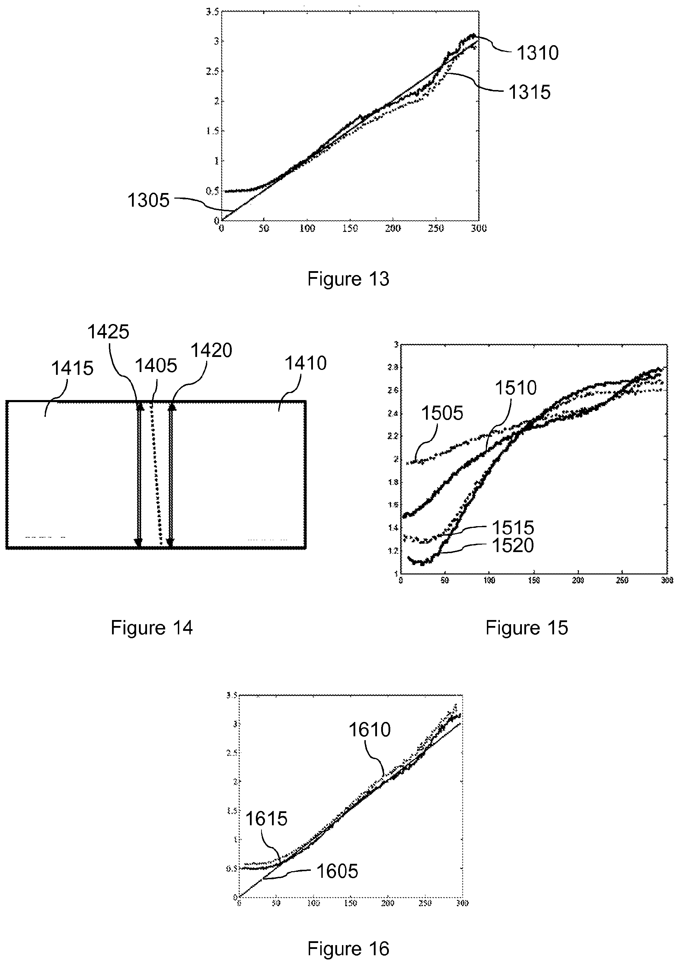

On observe, en figure 13, en ordonnée, une évaluation de la profondeur, en millimètre, le long d'une fissure pour une fissure de profondeur, en abscisse, non constante, comprise entre 0 et 3 millimètres pour deux largeurs de fissure, l'une de 40 micromètres et l'autre de 80 micromètres. On observe, dans ce repère, trois courbes :

- une droite 1305 correspondant à la profondeur attendue et mesurant, ainsi, exactement la profondeur de la fissure,
- une première courbe 1315 correspondant à la profondeur évaluée pour une largeur de fissure de 40 micromètres et
- une deuxième courbe 1310 correspondant à la profondeur évaluée pour une largeur de fissure de 80 micromètres.

On remarque que les profondeurs évaluées sont pratiquement similaires aux profondeurs attendues, représentées par la droite 1305.

En fonction d'au moins une des deux valeurs des indicateurs déterminées par rapport à la courbe de phase et d'amplitude, la valeur de la profondeur de la fissure peut être déterminée.

Cette valeur de profondeur peut être égale à la valeur de l'un des indicateurs ou au produit des deux, par exemple.

Dans des modes de réalisation, chaque étape 125 de capture d'image est réalisée à une fréquence de $v_i/L$, où « $v_i$ » correspond à la vitesse de balayage mise en oeuvre au cours de l'étape de balayage et « L » correspond à la distance totale de balayage de la source thermique sur la face.

Dans des modes de réalisation, chaque étape 125 de capture d'image est réalisée aux fréquences harmoniques de $nv_i/L$, où $n \geq 1$ et où « $v_i$ » correspond à la vitesse de balayage mise en oeuvre au cours de l'étape de balayage et « L » correspond à la distance totale de balayage de la source thermique sur la face.

Dans des modes de réalisation préférentiels, une profondeur de la fissure déterminée au cours de l'étape 120 de détermination est déterminée en fonction d'au moins trois valeurs d'amplitude et/ou d'au moins trois valeurs de phase captées à au moins trois fréquences, déterminées soit à partir de trois vitesses de balayage différentes, soit pour une vitesse et trois fréquences harmoniques, soit pour une combinaison de vitesses différentes et de fréquences harmoniques.

Dans des modes de réalisation, l'ensemble d'étapes formé par les étapes de balayage 110, de détection 115 et de détermination 120 est réalisée deux fois :

- une première fois selon un premier sens le long de la fissure et
- une deuxième fois selon un deuxième sens, opposé au premier sens, le long de la fissure,

la profondeur de la fissure étant déterminée en fonction des profondeurs déterminées au cours de chaque étape de détermination.

Dans des modes de réalisation, l'ensemble d'étapes formé par les étapes de balayage 110, de détection 115 et de détermination 120 est réalisée deux fois :

- une première fois selon un premier côté de la surface par rapport à la fissure et
- une deuxième fois selon un deuxième côté de la surface, opposé au premier côté par rapport à la fissure,

la profondeur de la fissure étant déterminée en fonction des profondeurs déterminées au cours de chaque étape de détermination.

On observe, en figure 14, schématiquement :

- une fissure 1405 délimitant deux côtés, 1410 et 1415, d'une surface,
- un chemin, 1420 et 1425, de balayage par la source thermique de chaque côté de la fissure 1405.

On observe, en figure 15, en ordonnée, une valeur d'indicateur de profondeur, en unité arbitraire, le long de la fissure 1405 représentée en figure 14. On observe, dans ce repère, quatre courbes :

- une première courbe 1505 représentative de l'indicateur de profondeur observé lorsque la source chaleur balaie un côté 1410 de la fissure 1405 du bas vers le haut,
- une deuxième courbe 1510 représentative de l'indicateur de profondeur observé lorsque la source chaleur balaie un côté 1415 de la fissure 1405 du bas vers le haut,
- une troisième courbe 1515 représentative de l'indicateur de profondeur observé lorsque la source chaleur balaie un côté 1410 de la fissure 1405 de haut en bas,
- une quatrième courbe 1520 représentative de l'indicateur de profondeur observé lorsque la source chaleur balaie un côté 1415 de la fissure 1405 de haut en bas.

On observe, en figure 16, en ordonnée, une évaluation de la profondeur, en millimètre, le long d'une fissure pour une fissure de profondeur, en abscisse, non constante, comprise entre 0 et 3 millimètres. On observe, dans ce repère, trois courbes :

- une droite 1605 correspondant à la profondeur attendue et mesurant, ainsi, exactement la profondeur de la fissure,
- une première courbe 1615 correspondant à la profondeur évaluée par calcul de la moyenne entre la première courbe 1505 et la quatrième courbe 1520 et
- une deuxième courbe 1610 correspondant à la profondeur évaluée par calcul de la moyenne entre la deuxième courbe 1510 et la troisième courbe 1515.

On observe, alors, que les profondeurs évaluées sont similaires à la profondeur attendue.

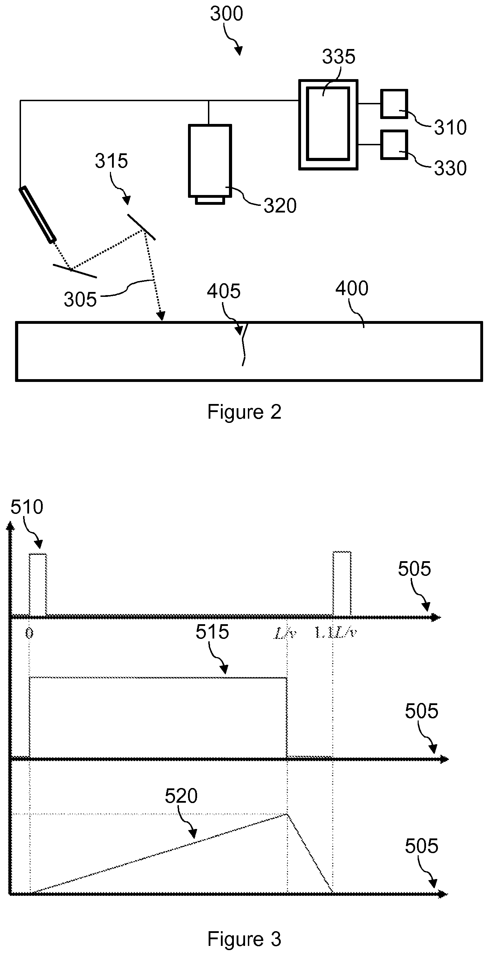

On observe, en figure 3, schématiquement, une juxtaposition de courbes d'activation du moyen de détection mis en oeuvre au cours de l'étape de détection. Ces courbes ont pour abscisse 505 le temps et pour ordonnée, chacune, une grandeur physique non spécifiée.

La première courbe 510 illustre un signal d'impulsion de mise en marche du moyen de détection, telle une caméra infrarouge.

Conjointement à ce signal d'impulsion, la deuxième courbe 515 correspond à un signal d'activation de la source thermique, telle une source laser par exemple. On observe que la source thermique est active pendant le temps de chauffe total dont la durée est égale à $L/v$, où « v » correspond à une valeur particulière de la vitesse de balayage $v_i$.

On observe, sur la troisième courbe 520, la distance entre le positionnement de la source thermique sur la partie de la face du solide à chauffer et le positionnement initial de la source thermique.

Ainsi, on observe qu'à la fin du temps de chauffe total, la source thermique est au point le plus éloigné du positionnement initial de la source thermique, la distance représentée par la courbe 520 étant une fonction linéaire du temps de chauffe écoulé.

Passé le temps de chauffe total, la source thermique est désactivée et redirigée vers le point initial de positionnement de cette source thermique. Au cours de cette redirection, le chemin parcouru par la source thermique peut être identique au chemin parcouru au cours de l'étape de balayage.

On observe, également, que la durée du retour peut être différente de la durée de l'étape de balayage 110.

Pour mettre en oeuvre le procédé 100, un dispositif comportant :

- un premier terminal commandant :

  - l'allumage d'une source laser,
  - les déplacements du rayon émis par la source laser sur la face du solide,
  - le déclenchement d'une capture par le moyen de capture d'au moins trois images infrarouges et

- un deuxième terminal recevant chaque image captée et comportant un moyen de détermination de la profondeur de la fissure en fonction d'au moins trois images captées.

Dans des variantes, telle que celle décrite en regard de la figure 3 ci-après, le premier et le deuxième terminal sont confondus.

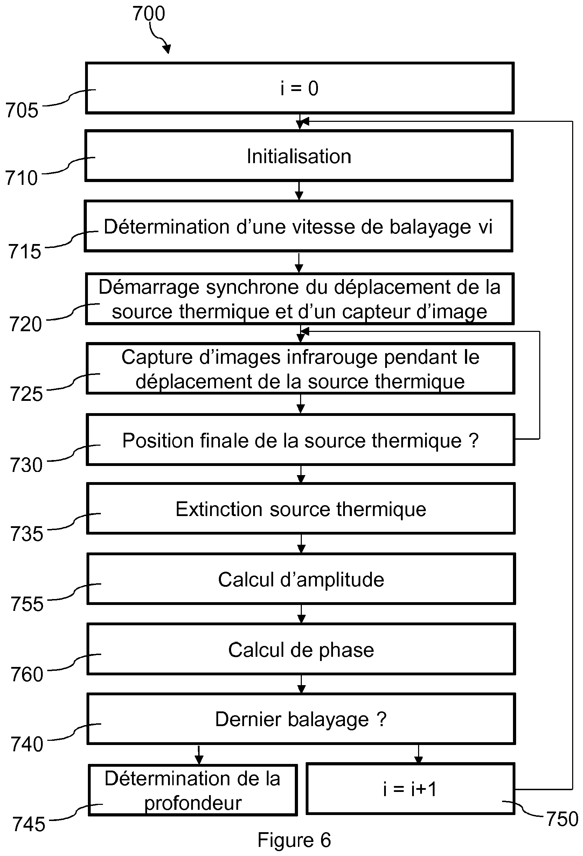

On observe, sur la figure 6, un logigramme d'étape particulier de la méthode 700 objet de la présente invention. Cette méthode 700 comporte :

- une étape 705 d'initialisation d'une variable incrémentale notée « i »,
- une étape 710 d'initialisation en position de la source thermique en fonction du sens de déplacement de cette source le long de la fissure et du côté de la fissure contre lequel est positionnée la source thermique,
- une étape 715 de détermination d'une vitesse de déplacement de la source thermique dépendant de la valeur incrémentale,
- une étape 720 de démarrage synchrone de la source thermique et d'un capteur d'image infrarouge,
- une étape 725 de capture d'images infrarouge le long du déplacement de la source thermique à une fréquence d'échantillonnage connue du système de capture,
- une étape 730 de détermination de la position de la source thermique, de sorte que l'étape 725 de capture ait lieu tant que la source thermique n'est pas en position finale,
- si la source thermique est en position finale, une étape 735 d'extinction de la source thermique,
- une étape 740 de comparaison entre la valeur incrémentale et une valeur prédéterminée correspondant à la valeur maximale souhaitée de la valeur incrémentale,
- si la valeur incrémentale est différente de la valeur maximale, une étape 750 d'incrémentation de la valeur incrémentale, la méthode 700 redémarrant à l'étape 710 d'initialisation,
- si la valeur incrémentale est égale à la valeur maximale, une étape 745 de détermination de la profondeur de la fissure à partir de chaque image captée à chaque vitesse de déplacement déterminée.

On observe, sur la figure 2, schématiquement, un mode de réalisation particulier du dispositif 300 objet de la présente invention. Ce dispositif 300 de détermination de la profondeur d'une fissure 405 dans un solide 400, comporte :

- une source 305 thermique,
- un moyen 310 de détermination d'au moins une vitesse de balayage,
- un moyen 315 de balayage d'une partie d'une face du solide, le long de la fissure, par la source thermique à chaque vitesse de balayage déterminée,

- un moyen 320 de détection, synchrone au moyen de balayage, d'au moins une valeur d'une grandeur physique représentative de l'échauffement local de la face du solide balayée, à chaque vitesse de balayage déterminée, et
- un moyen 330 de détermination de la profondeur de la fissure en fonction d'au moins une valeur détectée à au moins une vitesse de balayage déterminée.

Dans des modes de réalisation préférentiels, l'étape de balayage comporte une étape de capture d'au moins trois valeurs d'amplitude et/ou d'au moins trois valeurs de phase captées à au moins trois fréquences, déterminées soit à partir de trois vitesses de balayage différentes, soit pour une vitesse et trois fréquences harmoniques, soit pour une combinaison de vitesses différentes et de fréquences harmoniques.

Le moyen de détermination 310 est, par exemple, un circuit électronique de commande d'un terminal 335.

Le moyen de balayage 315 est formé, par exemple, par un jeu de miroirs permettant le déplacement d'un rayon émis par une source d'émission laser, ce rayon agissant comme source thermique 305 au contact d'une surface du solide 400.

Le moyen de détection 320 est, par exemple, une caméra à infrarouge se déplaçant de manière synchrone au balayage réalisé par la source thermique 305.

Le moyen de détermination 330 est, par exemple, un circuit électronique de calcul configuré pour réaliser l'étape de détermination 120 décrite en regard de la figure 1.

## Revendications

1. Procédé (100) de détermination de la profondeur d'une fissure dans un solide, **caractérisé en ce qu'**il comporte :

   - une étape (105) de détermination d'au moins une vitesse de balayage d'une face du solide, comportant la fissure, par une source thermique positionnée,
   - pour chaque vitesse déterminée :
   - une étape (110) de balayage d'une partie de la face du solide, à proximité de la fissure et de manière parallèle au sens général de la fissure, par la source thermique à ladite vitesse et
   - une étape (115) de détection, synchrone à l'étape de balayage, d'au moins une valeur d'une grandeur physique représentative de l'échauffement local de la face du solide balayée,
   - une étape (120) de détermination de la profondeur de la fissure en fonction d'au moins une valeur détectée à au moins une vitesse de balayage déterminée, une profondeur de la fissure déterminée au cours de l'étape (120) de détermination est déterminée en fonction d'au moins trois valeurs d'amplitude et/ou d'au moins trois valeurs de phase captées à au moins trois fréquences, déterminées soit à partir de trois vitesses de balayage différentes, soit pour une vitesse et trois fréquences harmoniques, soit pour une combinaison de vitesses différentes et de fréquences harmoniques, les fréquences harmoniques correspondent à fréquence fondamentale dont l'inverse correspond au temps nécessaire pour que la source thermique réalise un balayage.

2. Procédé (100) selon la revendication 1, dans lequel, au cours de l'étape (105) de détermination, au moins deux vitesses sont déterminées.

3. Procédé (100) selon la revendication 2, dans lequel, au cours de l'étape (105) de détermination, au moins trois vitesses sont déterminées.

4. Procédé (100) selon l'une des revendications 1 à 3, dans lequel l'étape (115) de détection comporte une étape (125) de capture d'au moins trois images infrarouges.

5. Procédé (100) selon la revendication 4, qui comporte au moins :

   - une étape (130) de calcul d'une valeur de l'amplitude de l'échauffement réalisé à partir des images infrarouges captées et/ou
   - une étape (135) de calcul d'une valeur de la phase de l'échauffement réalisé à partir des images infrarouges captées.

6. Procédé (100) selon la revendication 5, dans lequel chaque étape (125) de capture d'image est réalisée à une fréquence de $v_i/L$, où « $v_i$ » correspond à la vitesse de balayage mise en œuvre au cours de l'étape de balayage et « L » correspond à la distance totale de balayage de la source thermique sur la face.

7. Procédé (100) selon la revendication 5, dans lequel chaque étape (125) de capture d'image est réalisée aux fréquences harmoniques de $nv_i/L$, où $n \geq 1$ et où « $v_i$ » correspond à la vitesse de balayage mise en œuvre au cours de l'étape de balayage et « L » correspond à la distance totale de balayage de la source thermique sur la face.

8. Procédé (100) selon l'une des revendications 1 à 7, dans lequel la source thermique est un laser à émission continue.

9. Procédé (100) selon l'une des revendications 1 à 8, dans lequel l'ensemble d'étapes formé par les étapes de balayage (110), de détection (115) et de détermination (120) est réalisée deux fois :

   - une première fois selon un premier sens le long de la fissure et
   - une deuxième fois selon un deuxième sens, opposé au premier sens, le long de la fissure,

la profondeur de la fissure étant déterminée en fonction des profondeurs déterminées au cours de chaque étape de détermination.

10. Procédé (100) selon l'une des revendications 1 à 9, dans lequel l'ensemble d'étapes formé par les étapes de balayage (110), de détection (115) et de détermination (120) est réalisée deux fois :

   - une première fois selon un premier côté de la surface par rapport à la fissure et
   - une deuxième fois selon un deuxième côté de la surface, opposé au premier côté par rapport à la fissure,

la profondeur de la fissure étant déterminée en fonction des profondeurs déterminées au cours de chaque étape de détermination.

11. Dispositif (300) de détermination de la profondeur d'une fissure (405) dans un solide (400), **caractérisé en ce qu'**il comporte :

   - une source (305) thermique,
   - un moyen (310) de détermination d'au moins une vitesse de balayage,
   - un moyen (315) de balayage d'une partie d'une face du solide, à proximité de la fissure et de manière parallèle au sens général de la fissure, par la source thermique à chaque vitesse de balayage déterminée,
   - un moyen (320) de détection, synchrone au moyen de balayage, d'au moins une valeur d'une grandeur physique représentative de l'échauffement local de la face du solide balayée, à chaque vitesse de balayage déterminée, et

un moyen (330) de détermination de la profondeur de la fissure en fonction d'au moins une valeur détectée à au moins une vitesse de balayage déterminée, une profondeur de la fissure déterminée au cours de l'étape (120) de détermination est déterminée en fonction d'au moins trois valeurs d'amplitude et/ou d'au moins trois valeurs de phase captées à au moins trois fréquences, déterminées soit à partir de trois vitesses de balayage différentes, soit pour une vitesse et trois fréquences harmoniques, soit pour une combinaison de vitesses différentes et de fréquences harmoniques, les fréquences harmoniques correspondent à fréquence fondamentale dont l'inverse correspond au temps nécessaire pour que la source thermique réalise un balayage.

**Patentansprüche**

1. Verfahren (100) zur Bestimmung der Tiefe eines Risses in einem Feststoff, **dadurch gekennzeichnet, dass** es umfasst:

   - einen Schritt (105) zur Bestimmung wenigstens einer Abtastgeschwindigkeit einer Seite des Feststoffes, umfassend den Riss, durch eine positionierte Wärmequelle,
   - für jede bestimmte Geschwindigkeit:

     - einen Schritt (110) zum Abtasten eines Teils der Seite des Feststoffs in der Nähe des Risses und parallel zur allgemeinen Richtung des Risses durch die Wärmequelle der genannten Geschwindigkeit und
     - einen Schritt (115) zum Erkennen, synchron zum Abtastschritt, wenigstens eines Wertes einer physikalischen Größe, die die lokale Erwärmung der Seite des abgetasteten Feststoffs darstellt,

   - einen Schritt (120) zum Bestimmen der Tiefe des Risses in Abhängigkeit wenigstens eines Wertes, der in wenigstens einer bestimmten Abtastgeschwindigkeit erfasst wird, einer Tiefe des Risses, die im Verlauf des Schrittes (120) zur Bestimmung bestimmt wird, in Abhängigkeit von wenigstens drei Amplitudenwerten und / oder wenigstens drei Phasenwerten, die in wenigstens drei Frequenzen, die entweder ausgehend von drei unterschiedlichen Abtastgeschwindigkeiten oder für eine Geschwindigkeit und drei harmonische Frequenzen oder für eine Kombination aus unterschiedlichen Geschwindigkeiten und harmonischen Frequenzen erfasst wird, wobei die harmonischen Frequenzen einer Grundfrequenz entsprechen, deren Umkehrung der Zeit entspricht, die notwendig ist, damit die Wärmequelle ein Abtasten vornimmt.

2. Verfahren (100) gemäß Anspruch 1, bei dem im Verlauf des Schritts (105) zur Bestimmung wenigstens zwei Geschwindigkeiten bestimmt werden.

3. Verfahren (100) gemäß Anspruch 2, bei dem im Verlauf des Schritts (105) zur Bestimmung wenigstens drei Geschwindigkeiten bestimmt werden.

4. Verfahren (100) gemäß einem der Ansprüche 1 bis 3, bei dem der Schritt (115) zum Erkennen einen Schritt (125) zum Erfassen von wenigstens drei Infrarotbildern umfasst.

5. Verfahren (100) gemäß Anspruch 4, das wenigstens umfasst:

   - einen Schritt (130) zum Berechnen eines Wertes der Amplitude der Erwärmung, die ausgehend von erfassten Infrarotbildern durchgeführt wird, und / oder
   - einen Schritt (135) zum Berechnen eines Wertes der Phase der Erwärmung, die ausgehend von erfassten Infrarotbildern durchgeführt wird.

6. Verfahren (100) gemäß Anspruch 5, bei dem jeder Schritt (125) zur Bilderfassung in einer Frequenz von $v_i$/L durchgeführt wird, wobei "$v_i$" der Abtastgeschwindigkeit entspricht, die im Verlauf des Schrittes zum Abtasten entspricht und "L" der gesamten Abtastentfernung der Wärmequelle auf der Seite entspricht.

7. Verfahren (100) gemäß Anspruch 5, bei dem jeder Schritt (125) zur Bilderfassung in den harmonischen Frequenzen von $v_i$/L durchgeführt wird, wobei n ≥ 1 und wobei "$v_i$" der Abtastgeschwindigkeit entspricht, die im Verlauf des Schrittes zum Abtasten entspricht und "L" der gesamten Abtastentfernung der Wärmequelle auf der Seite entspricht.

8. Verfahren (100) gemäß einem der Ansprüche 1 bis 7, bei dem die Wärmequelle ein Laser mit Daueremission ist.

9. Verfahren (100) gemäß einem der Ansprüche 1 bis 8, bei dem die Gruppe von Schritten, die von den Schritten zum Abtasten (110), zum Erkennen (115) und zum Bestimmen (120) gebildet wird, in zwei Malen durchgeführt wird:

   - ein erstes Mal gemäß einer ersten Richtung entlang dem Riss und
   - ein zweites Mal gemäß einer zweiten Richtung gegenüber der ersten Richtung entlang dem Riss und

   wobei die Tiefe des Risses in Abhängigkeit von den Tiefen bestimmt wird, die im Verlauf jedes Schritts zum Bestimmen bestimmt werden.

10. Verfahren (100) gemäß einem der Ansprüche 1 bis 9, bei dem die Gruppe von Schritten, die von den Schritten zum Abtasten (110), zum Erkennen (115) und zum Bestimmen (120) gebildet wird, in zwei Malen durchgeführt wird:

    - ein erstes Mal gemäß einer ersten Seite der Oberfläche im Verhältnis zum Riss und
    - ein zweites Mal gemäß einer zweiten Seite der Oberfläche gegenüber der ersten Seite im Verhältnis zum Riss,

wobei die Tiefe des Risses in Abhängigkeit von den Tiefen bestimmt wird, die im Verlauf jedes Schritts zum Bestimmen bestimmt werden.

11. Vorrichtung (300) zur Bestimmung der Tiefe eines Risses (405) in einem Feststoff (400), **dadurch gekennzeichnet, dass** es umfasst:

- eine Wärmequelle (305),
- ein Mittel (310) zur Bestimmung wenigstens einer Abtastgeschwindigkeit,
- ein Mittel (315) zum Abtasten eines Teils einer Seite des Feststoffs in der Nähe des Risses und parallel zur allgemeinen Richtung des Risses durch die Wärmequelle bei jeder bestimmten Abtastgeschwindigkeit,
- ein Mittel (320) zum Erkennen, synchron zum Abtastmittel, wenigstens eines Wertes einer physikalischen Größe, die die lokale Erwärmung der Seite des abgetasteten Feststoffs bei jeder bestimmten Abtastgeschwindigkeit darstellt und

ein Mittel (330) zum Bestimmen der Tiefe des Risses in Abhängigkeit wenigstens eines Wertes, der in wenigstens einer bestimmten Abtastgeschwindigkeit erfasst wird, einer Tiefe des Risses, die im Verlauf des Schrittes (120) zur Bestimmung bestimmt wird, in Abhängigkeit von wenigstens drei Amplitudenwerten und / oder wenigstens drei Phasenwerten, die in wenigstens drei Frequenzen, die entweder ausgehend von drei unterschiedlichen Abtastgeschwindigkeiten oder für eine Geschwindigkeit und drei harmonische Frequenzen oder für eine Kombination aus unterschiedlichen Geschwindigkeiten und harmonischen Frequenzen bestimmt wird, wobei die harmonischen Frequenzen einer Grundfrequenz entsprechen, deren Umkehrung der Zeit entspricht, die notwendig ist, damit die Wärmequelle ein Abtasten vornimmt.

**Claims**

1. Method (100) for determining the depth of a crack in a solid, **characterized in that** it comprises:

- a step (105) of determining at least one speed for scanning a surface of the solid comprising the crack by a positioned heat source;
- for every speed determined:

- a step (110) of scanning a portion of the surface of the solid, in proximity to the crack and parallel to the general direction of the crack, by the heat source at said speed; and
- a step (115), synchronous with the scanning step, of detecting at least one value of a physical quantity representing the local heating of the surface of the scanned solid; and

a step (120) of determining the depth of the crack as a function of at least one value detected at least at one predetermined scanning speed, a depth of the crack determined during the determination step (120) is determined as a function of at least three amplitude values and/or at least three phase values captured at three frequencies at least, determined from three different scanning speeds, or for one speed and three harmonic frequencies, or for a combination of different speeds and harmonic frequencies, the harmonic frequencies correspond to the fundamental frequency whose inverse corresponds to the time required for the thermal source to perform a sweep.

2. Method (100) according to claim 1, wherein, during the determination step (105), at least two speeds are determined.

3. Method (100) according to claim 2, wherein, during the determination step (105), at least three speeds are determined.

4. Method (100) according to one of claims 1 to 3, wherein the detection step (115) comprises a step of capturing at least three infrared images (125).

5. Method (100) according to claim 4, which comprises at least:

- a step (130) of calculating a value of the heating amplitude realized from captured infrared images; and/or
- a step (135) of calculating a value of the heating phase realized from captured infrared images.

6. Method (100) according to claim 5, wherein each image capture step (125) is carried out at a frequency of $v_i/L$, where "$v_i$" is the scanning speed utilized in the scanning step and "L" is the total scanning distance of the heat source on the surface.

7. Method (100) according to claim 5, wherein each image capture step (125) is carried out at frequencies of $nv_i/L$, where $n \geq 1$ and where "$v_i$" is the scanning speed utilized in the scanning step and "L" is the total scanning distance of the heat source on the surface.

8. Method (100) according to one of claims 1 to 7, wherein the heat source is a continuous emission laser.

9. Method (100) according to one of claims 1 to 8, wherein all the steps made up of the steps of scanning (110), detection (115) and determination (120) are performed twice:

   - a first time in a first direction along the crack and
   - a second time along a second direction, opposite to the first direction, along the crack, the depth of the crack being determined as a function of the depths determined during each determination step.

10. Method (100) according to one of claims 1 to 10, wherein all the steps made up of the steps of scanning (110), detection (115) and determination (120) are performed twice:

   - a first time in a first direction along a first side of the surface relative to the crack and
   - a second time along a second side of the surface, opposite to the first side relative to the crack,

   the depth of the crack being determined as a function of the depths determined during each determination step.

11. Device (300) for determining the depth of a crack (405) in a solid (400), **characterized in that** it comprises:

   - a heat source (305);
   - a means (310) for determining at least one scanning speed;
   - a means (315) for scanning a portion of the surface of the solid, parallel to the general direction of the crack, by the heat source at each predetermined scanning speed;
   - a means (320), synchronous with the scanning means, for detecting at least one value of a physical quantity representing the local heating of the surface of the scanned solid; and
   - a means (330) for determining the depth of the crack as a function of at least one value detected at least at one predetermined scanning speed, a depth of the crack determined during the determination step (120) is determined as a function of at least three amplitude values and/or at least three phase values captured at three frequencies at least, determined from three different scanning speeds, or for one speed and three harmonic frequencies, or for a combination of different speeds and harmonic frequencies, the harmonic frequencies correspond to the fundamental frequency whose inverse corresponds to the time required for the thermal source to

perform a sweep.

100

Positionnement

104

Détermination d'au moins une vitesse de balayage

105

Balayage

110

Détection

115

Capture

125

Calcul d'amplitude

130

Calcul de phase

135

Evaluation d'une profondeur

120

Figure 1

300

335

310

320

315

305

405    400

Figure 2

510

505

515

$L/v$   $1.1L/v$

505

520

505

Figure 3

Figure 4

Figure 5

700

| 705 | i = 0 |

| 710 | Initialisation |

| 715 | Détermination d'une vitesse de balayage vi |

| 720 | Démarrage synchrone du déplacement de la source thermique et d'un capteur d'image |

| 725 | Capture d'images infrarouge pendant le déplacement de la source thermique |

| 730 | Position finale de la source thermique ? |

| 735 | Extinction source thermique |

| 755 | Calcul d'amplitude |

| 760 | Calcul de phase |

| 740 | Dernier balayage ? |

| 745 | Détermination de la profondeur |

| 750 | i = i+1 |

Figure 6

805

800

810

815

820

Figure 7a

805

800

810

815

820

Figure 7b

800

820

825

Figure 7c

800

820

Figure 7d

805

810

815

Figure 8

1000

Figure 9

1100

Figure 10

$I_A$

Figure 11

$I_\varphi$

Figure 12

Figure 13

Figure 14

Figure 15

Figure 16

Figure 17

Figure 18

Figure 19

Figure 20

Figure 21

**EP 3 436 772 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2995989
- US 5376793 A
- US 2004262521 A